# EUROPEAN PATENT APPLICATION

(11) **EP 4 654 168 A1**
(43) Date of publication of application: **26.11.2025**
(21) Application number: 24703235.2
(22) Date of filing: 12.01.2024
(51) Int. Cl.: G08G 1/00, B60W 30/14, B60W 30/16

(54) **CONTROL DEVICE AND CONTROL METHOD**

(30) Priority: 17.01.2023 JP 2023004804
(71) Applicant: Robert Bosch GmbH, 70442 Stuttgart (DE)
(72) Inventor: IGARI, Yoshihide, Yokohama-shi, Kanagawa 228-5014 (JP); SATO, Akira, Yokohama-shi, Kanagawa 228-5014 (JP)
(74) Representative: Isarpatent
(86) International application number: PCT/IB2024/050337
(87) International publication number: WO 2024/154029

(57) **Abstract**

To appropriately assist the driving of a rider of a straddle type vehicle traveling as a group.

An execution section of a control device executes a positional relationship adjusting operation that adjusts a positional relationship between an own vehicle (1) and a target vehicle in a group including the own vehicle (1) and traveling as a group and executes an acceleration increase suppression operation that suppresses an increase in acceleration of the own vehicle (1) compared to an increase in acceleration of the own vehicle (1) when a second other vehicle (2a) located in a convoy to which the own vehicle (1) belongs is set as the target vehicle in a case where a first other vehicle (2b) is no more detected by a surrounding environment sensor (14) in a situation in which the first other vehicle (2b) located in a convoy to which the own vehicle (1) does not belong is set as the target vehicle or when the speed control is executed without setting the target vehicle.

## Description

### Technical Field

The present disclosure relates to a control device and a control method capable of appropriately assisting the driving of a rider of a straddle type vehicle traveling as a group.

### Background Art

Conventionally, various technologies have been proposed to assist rider's driving of straddle type vehicles such as motorcycles. For example, PTL 1 discloses a driver assisting system which warns a rider of a motorcycle that the rider is inappropriately approaching an obstacle in a traveling direction or a substantially traveling direction on the basis of information detected by a sensor device that detects the obstacle.

### Citation List

### Patent Literature

PTL 1: JP2009-116882A

### Summary of Invention

### Technical Problem

Incidentally, as a technology that assists the driving of the vehicle, there is known a positional relationship adjusting operation that adjusts a positional relationship between an own vehicle and a target vehicle to be a target positional relationship. Then, it is conceived to apply the positional relationship adjusting operation to a straddle type vehicle. Here, in some cases, a group including a plurality of straddle type vehicles including an own vehicle may travel in a plurality of convoys as a group. In such group traveling, there is a desire for a proposal for appropriately using a positional relationship adjusting operation to appropriately assist the driving of the rider of the straddle type vehicle.

The present invention has been made in view of the above-described problems and an object thereof is to obtain a control device and a control method capable of appropriately assisting the driving of a rider of a straddle type vehicle in group traveling.

### Solution to Problem

A control device according to the present invention is a control device for controlling the behavior of a straddle type vehicle including: an execution section which executes a positional relationship adjusting operation that adjusts a positional relationship between an own vehicle and a vehicle set as a target vehicle in the other vehicles constituting a group, including a plurality of straddle type vehicles including the own vehicle and traveling in a plurality of convoys as a group, to be a target positional relationship, wherein in the positional relationship adjusting operation, the execution section sets the other vehicle detected by a surrounding environment sensor installed in the own vehicle as the target vehicle, executes speed control for controlling the speed of the own vehicle to a target speed when the target vehicle is not set, and executes an acceleration increase suppression operation that suppresses an increase in acceleration of the own vehicle compared to an increase in acceleration of the own vehicle when a second other vehicle corresponding to the other vehicle located in the convoy to which the own vehicle belongs is set as the target vehicle in a case where a first other vehicle is no more detected by the surrounding environment sensor in a situation in which the first other vehicle corresponding to the other vehicle located in the convoy to which the own vehicle does not belong is set as the target vehicle or an increase in acceleration of the own vehicle when the speed control is executed without setting the target vehicle.

A control method according to the present invention is a control method of controlling the behavior of a straddle type vehicle including: allowing an execution section of a control device to execute a positional relationship adjusting operation that adjusts a positional relationship between an own vehicle and a vehicle set as a target vehicle in the other vehicles constituting a group, including a plurality of straddle type vehicles including the own vehicle and traveling in a plurality of convoys as a group, to be a target positional relationship, wherein in the positional relationship adjusting operation, the execution section sets the other vehicle detected by a surrounding environment sensor installed in the own vehicle as the target vehicle, executes speed control for controlling the speed of the own vehicle to a target speed when the target vehicle is not set, and executes an acceleration increase suppression operation that suppresses an increase in acceleration of the own vehicle compared to an increase in acceleration of the own vehicle when a second other vehicle corresponding to the other vehicle located in the convoy to which the own vehicle belongs is set as the target vehicle in a case where a first other vehicle is no more detected by the surrounding environment sensor in a situation in which the first other vehicle corresponding to the other vehicle located in the convoy to which the own vehicle does not belong is set as the target vehicle or an increase in acceleration of the own vehicle when the speed control is executed without setting the target vehicle.

### Advantageous Effects of Invention

In the control device and the control method according to the present invention, the execution section of the control device executes the positional relationship adjusting operation that adjusts the positional relationship between the own vehicle and the vehicle set as the target vehicle in the other vehicles constituting a group, including the plurality of straddle type vehicles including the own vehicle and traveling in a plurality of convoys as a group, to be the target positional relationship and in the positional relationship adjusting operation, the execution section sets the other vehicle detected by the surrounding environment sensor installed in the own vehicle as the target vehicle, executes the speed control of controlling the speed of the own vehicle to the target speed when the target vehicle is not set, and executes the acceleration increase suppression operation that suppresses an increase in acceleration of the own vehicle compared to an increase in acceleration of the own vehicle when the second other vehicle corresponding to the other vehicle located in the convoy to which the own vehicle belongs is set as the target vehicle in a case where the first other vehicle is no more detected by the surrounding environment sensor in a situation in which the first other vehicle corresponding to the other vehicle located in the convoy to which the own vehicle does not belong is set as the target vehicle or an increase in acceleration of the own vehicle when the speed control is executed without setting the target vehicle. Accordingly, it is possible to suppress the own vehicle from overtaking the first other vehicle when the first other vehicle is no more detected by the surrounding environment sensor in a situation in which the first other vehicle is set as the target vehicle. Therefore, it becomes easier to detect the first other vehicle again by the surrounding environment sensor and it is possible to appropriately assist the driving of the rider of the straddle type vehicle in the group traveling.

### Brief Description of Drawings

Fig. 1 is a schematic view showing a schematic configuration of a straddle type vehicle according to an embodiment of the present invention.
Fig. 2 is a block diagram showing an example of a functional configuration of a control device according to the embodiment of the present invention.
Fig. 3 is a diagram showing a state in which a group including the straddle type vehicle according to the embodiment of the present invention is traveling as a group.
Fig. 4 is a diagram showing a state in which a first other vehicle corresponding to the other vehicle located in a convoy to which the straddle type vehicle according to the embodiment of the present invention does not belong is no longer detected by a surrounding environment sensor.
Fig. 5 is a flowchart showing an example of a flow of a process executed by the control device according to the embodiment of the present invention.

### Description of Embodiments

Hereinafter, a control device and a control method according to the present invention will be described with reference to the drawings.

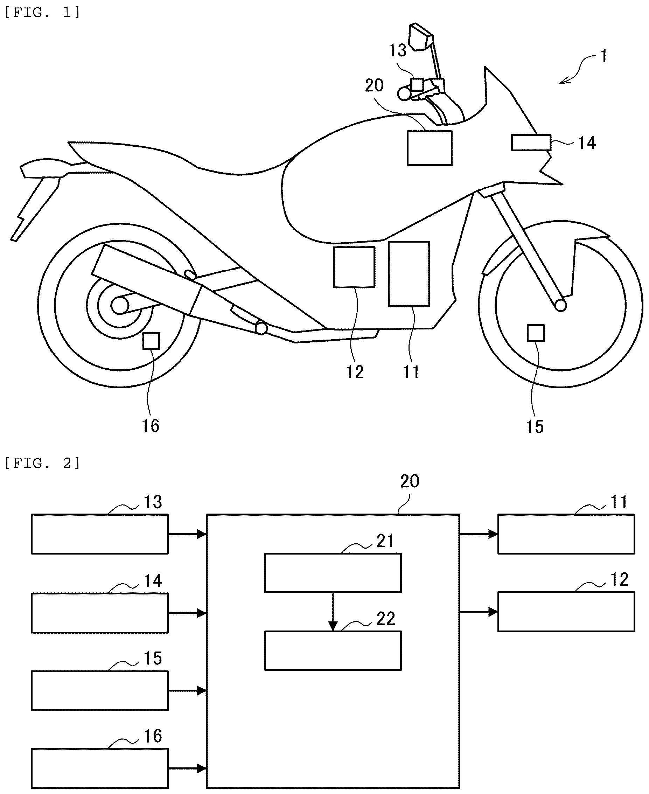

Furthermore, although a control device used for a two-wheeled motorcycle is described (see a straddle type vehicle 1 in Fig. 1), a vehicle to be controlled by the control device according to the present invention may be a straddle type vehicle other than the two-wheeled motorcycle. The straddle type vehicle means a vehicle in which a rider rides astride. The straddle type vehicles include, for example, motorcycles (two-wheeled vehicles, three-wheeled vehicles), bicycles, buggies, and the like. The motorcycles include vehicles powered by engines, vehicles powered by electric motors, and the like. The motorcycles include, for example, motorcycles, scooters, electric scooters, and the like. The bicycle means a vehicle that can be propelled on the road by the rider's pedaling force applied to pedals. The bicycles include regular bicycles, electrically assisted bicycles, electric bicycles, and the like.

Further, although a case will be described below in which an engine (specifically, an engine 11 in Fig. 1 to be described later) is installed as a drive source capable of outputting power to drive a drive wheel, a drive source (for example, an electric motor) other than the engine may be installed as the drive source or a plurality of drive sources may be installed as the drive source.

Further, although a case will be described below in which a control unit (specifically, a hydraulic pressure control unit 12 in Fig. 1 to be described later) controlling a hydraulic pressure of brake fluid is adopted as a control unit for a braking force generated in a wheel, a control unit (so-called brake-by-wire) that controls the position of the brake part itself of the wheel using an electrical signal may be adopted as the control unit of the braking force generated in the wheel.

Further, the configuration, operation, and the like described below are merely examples and the control device and the control method according to the present invention are not limited to such configurations, operations, and the like.

Further, the same or similar descriptions are simplified or omitted as appropriate below. Further, in each figure, the same or similar members or parts are indicated by the same reference numerals or the reference numerals are omitted. Further, detailed structures are simplified or omitted as appropriate.

### <Configuration of straddle type vehicle>

Referring to Figs. 1 to 3, the configuration of the straddle type vehicle 1 according to the embodiment of the present invention will be described.

Fig. 1 is a schematic view showing a schematic configuration of the straddle type vehicle 1. The straddle type vehicle 1 is a two-wheeled motorcycle corresponding to an example of the straddle type vehicle according to the present invention. As shown in Fig. 1, the straddle type vehicle 1 includes the engine 11, the hydraulic pressure control unit 12, an input device 13, a surrounding environment sensor 14, a front wheel speed sensor 15, a rear wheel speed sensor 16, and a control device (ECU) 20. Furthermore, in the present specification, the straddle type vehicle 1 is also referred to as an own vehicle 1.

The engine 11 corresponds to an example of the drive source of the straddle type vehicle 1 and can output power for driving a drive wheel (specifically, a rear wheel). For example, the engine 11 is provided with one or more cylinders each having a combustion chamber, a fuel injection valve injecting fuel into the combustion chamber, and a spark plug. When fuel is injected from the fuel injection valve, a mixture containing air and fuel is formed in the combustion chamber and the mixture is burned by being ignited by the spark plug. Accordingly, a piston inside the cylinder moves in a reciprocating manner to rotate a crankshaft. Further, a throttle valve is provided in an intake pipe of the engine 11, and the amount of air taken into the combustion chamber changes depending on a throttle opening which is the opening of the throttle valve.

The hydraulic pressure control unit 12 is a unit that has a function of controlling the braking force generated in the wheel. For example, the hydraulic pressure control unit 12 is provided on a hydraulic line connecting a master cylinder and a wheel cylinder and includes components (for example, a control valve and a pump) for controlling the brake hydraulic pressure of the wheel cylinder. Since the operation of the components of the hydraulic pressure control unit 12 is controlled, the braking force generated in the wheel is controlled. Furthermore, the hydraulic pressure control unit 12 may control the braking force generated in each of both the front wheel and the rear wheel or may control only the braking force generated in one of the front wheel and the rear wheel.

The input device 13 receives various operations by the rider. The input device 13 includes, for example, a push button provided on a handle and used for the rider's operation. The information on the rider's operation using the input device 13 is output to the control device 20.

The surrounding environment sensor 14 detects surrounding environment information on the environment around the straddle type vehicle 1. Specifically, the surrounding environment sensor 14 is provided in the front part of the straddle type vehicle 1 and detects the front surrounding environment information of the straddle type vehicle 1. The surrounding environment information detected by the surrounding environment sensor 14 is output to the control device 20.

The surrounding environment information detected by the surrounding environment sensor 14 may be information related to the distance or direction to the subject located around the straddle type vehicle 1 (for example, relative position, relative distance, relative speed, relative acceleration, and the like) and may be the characteristics of the subject located around the straddle type vehicle 1 (for example, the type of the subject, the shape of the subject itself, marks attached to the subject, and the like). The surrounding environment sensor 14 is, for example, a radar, a lidar sensor, an ultrasonic sensor, a camera, or the like.

The front wheel speed sensor 15 is a wheel speed sensor which detects the wheel speed of the front wheel (for example, the number of rotations per unit time [rpm] of the front wheel or the moving distance per unit time [km/h]) and outputs the detection result. The front wheel speed sensor 15 may detect other physical quantities that can be substantially converted into the wheel speed of the front wheel. The front wheel speed sensor 15 is provided in the front wheel.

The rear wheel speed sensor 16 is a wheel speed sensor which detects the wheel speed of the rear wheel (for example, the number of rotations per unit time [rpm] of the rear wheel or the moving distance per unit time [km/h]) and outputs the detection result. The rear wheel speed sensor 16 may detect other physical quantities that can be substantially converted into the wheel speed of the rear wheel. The rear wheel speed sensor 16 is provided in the rear wheel.

The control device 20 controls the behavior of the straddle type vehicle 1. For example, a part or all of the control device 20 is composed of a microcomputer, a microprocessor unit, and the like. Further, for example, a part or all of the control device 20 may be composed of something that can be updated such as firmware or may be a program module or the like executed by a command from a CPU or the like. The control device 20 may be, for example, a single device or divided into a plurality of devices.

As shown in Fig. 2, for example, the control device 20 includes an acquisition section 21 and an execution section 22. The control device 20 communicates with each device of the straddle type vehicle 1 (for example, the engine 11, the hydraulic pressure control unit 12, the input device 13, the surrounding environment sensor 14, the front wheel speed sensor 15, and the rear wheel speed sensor 16). Further, the control device 20 can control the operation of each device of the straddle type vehicle 1 (for example, the engine 11 and the hydraulic pressure control unit 12).

The acquisition section 21 acquires information from each device of the straddle type vehicle 1 and outputs the information to the execution section 22. For example, the acquisition section 21 acquires information from the input device 13, the surrounding environment sensor 14, the front wheel speed sensor 15, and the rear wheel speed sensor 16. Furthermore, in the present specification, acquiring information may include extracting or generating information (for example, calculated).

The execution section 22 executes various controls by controlling the operation of each device of the straddle type vehicle 1. The execution section 22 controls, for example, the operations of the engine 11 and the hydraulic pressure control unit 12.

In particular, the execution section 22 can execute a positional relationship adjusting operation. The positional relationship adjusting operation is an operation that adjusts the positional relationship between the straddle type vehicle 1 and the target vehicle to be the target positional relationship. Specifically, the execution section 22 can adjust the positional relationship between the straddle type vehicle 1 and the target vehicle to be the target positional relationship by automatically controlling the speed of the straddle type vehicle 1 in the positional relationship adjusting operation.

Hereinafter, an example will be described in which adaptive cruise control is executed as the positional relationship adjusting operation. However, the positional relationship adjusting operation is an operation that adjusts the positional relationship between the straddle type vehicle 1 and the target vehicle to be the target positional relationship, and also may be an operation other than the adaptive cruise control. For example, the positional relationship adjusting operation may be an operation which is not canceled even when the rider operates the accelerator and in which the target positional relationship changes in response to the accelerator operation amount.

In the adaptive cruise control, the execution section 22 automatically controls the speed of the straddle type vehicle 1 regardless of the rider's acceleration/deceleration operations (that is, accelerator operation and brake operation). The execution section 22 can control the speed of the straddle type vehicle 1, for example, on the basis of the speed information of the straddle type vehicle 1 acquired based on the wheel speed of the front wheel and the wheel speed of the rear wheel.

In the adaptive cruise control, for example, a target inter-vehicle distance which is a target value of an inter-vehicle distance between the straddle type vehicle 1 and the target vehicle is set and the execution section 22 controls the speed of the straddle type vehicle 1 so that the inter-vehicle distance between the straddle type vehicle 1 and the target vehicle is maintained at the target inter-vehicle distance. That is, the positional relationship in which the inter-vehicle distance between the straddle type vehicle 1 and the target vehicle becomes the target inter-vehicle distance corresponds to the target positional relationship. Furthermore, the inter-vehicle distance may mean the distance in the direction along the lane (specifically, the travel lane of the straddle type vehicle 1) or may mean the straight-line distance. For example, the acquisition section 21 acquires the inter-vehicle distance between the straddle type vehicle 1 and the target vehicle on the basis of the surrounding environment information of the straddle type vehicle 1 and the execution section 22 can control the speed of the straddle type vehicle 1 as described above on the basis of the inter-vehicle distance acquired in this way.

However, in the adaptive cruise control, for example, a target passing time difference which is a target value of a passing time difference (specifically, the time required for the straddle type vehicle 1 to pass the current position of the target vehicle from the current time point) is set and the execution section 22 may control the speed of the straddle type vehicle 1 so that the passing time difference is maintained at the target passing time difference. In this case, a positional relationship in which the passing time difference becomes the target passing time difference corresponds to a target positional relationship. For example, the acquisition section 21 acquires the passing time difference on the basis of the surrounding environment information of the straddle type vehicle 1 and the execution section 22 can control the speed of the straddle type vehicle 1 as described above on the basis of the passing time difference acquired in this way.

For example, the execution section 22 starts the adaptive cruise control using the rider's operation with the input device 13 as a trigger. Furthermore, the adaptive cruise control is canceled when the rider performs a specific operation such as a braking operation. Here, in the straddle type vehicle 1, the rider can select a group traveling mode as an adaptive cruise control mode. When the group traveling mode is selected, the execution section 22 executes the group traveling mode as the adaptive cruise control. The group traveling mode is a mode particularly suitable for group traveling in the adaptive cruise control. For example, in the group traveling mode, the target inter-vehicle distance or the target passing time difference is set to be short.

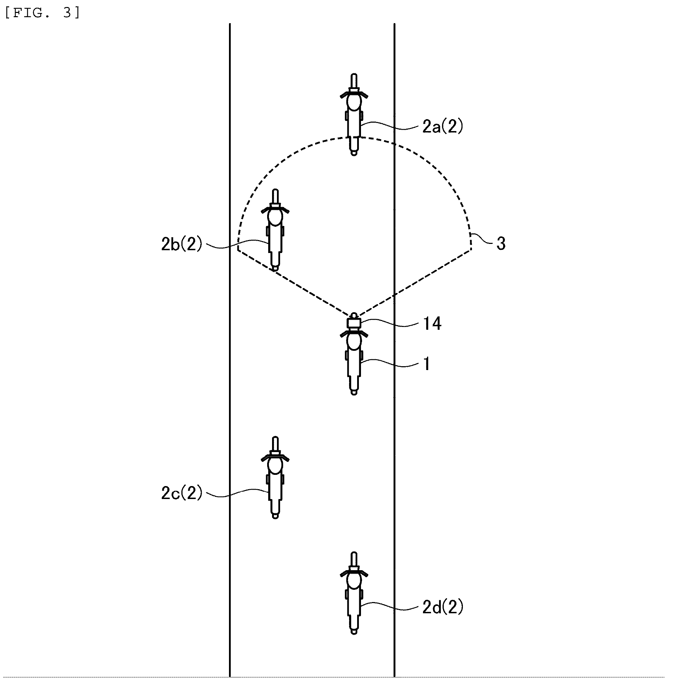

Fig. 3 is a diagram showing a state in which a group including the straddle type vehicle 1 (that is, the own vehicle 1) is traveling as a group. In the group traveling, a group including a plurality of straddle type vehicles including the own vehicle 1 travels in a plurality of convoys. Fig. 3 shows the own vehicle 1 and a part of the other vehicles 2a, 2b, 2c, and 2d in the other vehicles 2 (that is, the straddle type vehicles other than the own vehicle 1 in the group) constituting a group. Furthermore, the information for identifying the other vehicles 2 constituting the group may be manually set in advance in the control device 20 or may be automatically generated by the control device 20 in a traveling state. Accordingly, the control device 20 can identify the other vehicles 2 constituting the group. Further, the group traveling mode may be automatically enabled when automatically detecting a state in which the plurality of straddle type vehicles including the own vehicle 1 are traveling in a plurality of convoys.

As shown in Fig. 3, in the group traveling, the plurality of straddle type vehicles travel in two convoys as the left convoy and the right convoy in the same lane. In the example of Fig. 3, the other vehicle 2b and the other vehicle 2c constitute the left convoy. The other vehicle 2b and the other vehicle 2c are lined up in this order from the front side. On the other hand, the other vehicle 2a, the own vehicle 1, and the other vehicle 2d constitute the right convoy. The other vehicle 2a, the own vehicle 1, and the other vehicle 2d are lined up in this order from the front side in the longitudinal direction.

Further, as shown in Fig. 3, in the group traveling, the plurality of straddle type vehicles travel in an arrangement in which the straddle type vehicle constituting the left convoy and the straddle type vehicle constituting the right convoy are alternately arranged in the longitudinal direction (that is, a zigzag arrangement). In the example of Fig. 3, the other vehicle 2a in the right convoy, the other vehicle 2b in the left convoy, the own vehicle 1 in the right convoy, the other vehicle 2c in the left convoy, and the other vehicle 2d in the right convoy are lined up in this order from the front side.

As described above, the plurality of straddle type vehicles travel in the zigzag arrangement in the group traveling with the plurality of straddle type vehicles. Accordingly, it is possible to shorten the longitudinal distance between the vehicles compared to a case where the plurality of straddle type vehicles travel in one convoy. Therefore, it is possible to suppress the group from being separated by traffic light. Furthermore, as will be described later, the arrangement of the plurality of straddle type vehicles in the group traveling may be an arrangement other than the zigzag arrangement.

In the group traveling mode, the execution section 22 sets the other vehicle 2 detected by the surrounding environment sensor 14 installed in the own vehicle 1 as the target vehicle. Then, the execution section 22 adjusts the positional relationship between the own vehicle 1 and the vehicle set as the target vehicle in the other vehicles 2 constituting a group to be the target positional relationship. For example, as shown in Fig. 3, a detection range 3 of the surrounding environment sensor 14 extends radially forward from the front part of the own vehicle 1. The surrounding environment sensor 14 can detect the surrounding environment information inside the detection range 3. In the example of Fig. 3, the other vehicle 2b is located inside the detection range 3 of the surrounding environment sensor 14 and the surrounding environment sensor 14 detects the other vehicle 2b. Then, the execution section 22 sets the other vehicle 2b as the target vehicle.

As described above, in the group traveling mode, the first other vehicle (for example, in the example of Fig. 3, the other vehicle 2b) corresponding to the other vehicle 2 located in the convoy to which the own vehicle 1 does not belong is basically set as the target vehicle. The first other vehicle set as the target vehicle is closer to the own vehicle 1 than the second other vehicle (for example, in the example of Fig. 3, the other vehicle 2a) corresponding to the other vehicle 2 located in the convoy to which the own vehicle 1 belongs. Therefore, since the first other vehicle is set as the target vehicle, it becomes easier to maintain the formation of the group in an ideal formation by appropriately adjusting the positional relationship between the straddle type vehicles in the group. Furthermore, hereinafter, the other vehicle 2b is also referred to as the first other vehicle 2b and the other vehicle 2a is also referred to as the second other vehicle 2a.

Furthermore, in the group traveling mode, the execution section 22 executes speed control that controls the speed of the own vehicle 1 to the target speed when the target vehicle is not set. For example, the target vehicle is not set when the own vehicle 1 is the leading vehicle of the group. In such a case, the execution section 22 executes the above-described speed control. The above-described target speed is set in advance by, for example, the rider.

### <Operation of control device>

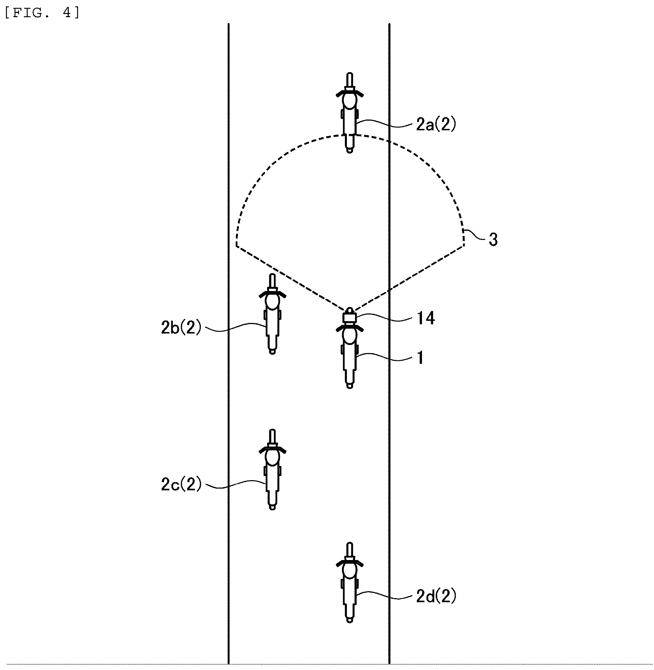

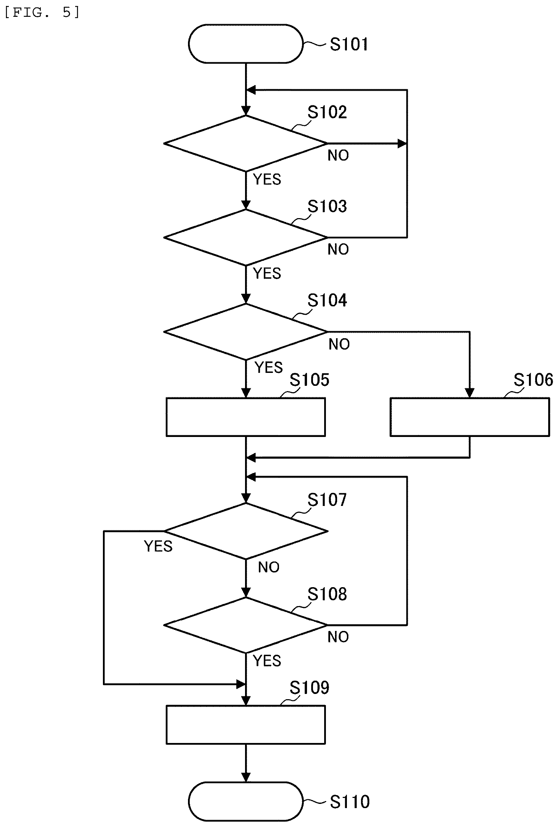

Referring to Figs. 4 and 5, the operation of the control device 20 according to the embodiment of the present invention will be described.

As described above, the execution section 22 of the control device 20 executes the group traveling mode. The group traveling mode corresponds to the positional relationship adjusting operation that adjusts the positional relationship between the own vehicle 1 and the vehicle set as the target vehicle in the other vehicles 2 constituting a group to be the target positional relationship when a group including a plurality of straddle type vehicles including the own vehicle 1 is traveling in a plurality of convoys as a group.

Here, in the group traveling mode, there is a case where the first other vehicle 2b may not be detected by the surrounding environment sensor 14 in a situation in which the first other vehicle 2b is set as the target vehicle. Fig. 4 is a diagram showing a state in which the first other vehicle 2b corresponding to the other vehicle 2 located in a convoy to which the straddle type vehicle 1 does not belong is no longer detected by the surrounding environment sensor 14. In the example of Fig. 4, the first other vehicle 2b is located outside the detection range 3 of the surrounding environment sensor 14 and the surrounding environment sensor 14 cannot detect the first other vehicle 2b. Such an event occurs because the traveling position and speed in the lane width direction are different between the own vehicle 1 and the first other vehicle 2b. For example, when the relative speed of the first other vehicle 2b with respect to the own vehicle 1 decreases from the situation of Fig. 3 and the first other vehicle 2b relatively moves backward, the first other vehicle 2b may move from the inside of the detection range 3 of the surrounding environment sensor 14 to the outside of the detection range 3 as in the situation of Fig. 4.

As will be described later by referring to the flowchart of Fig. 5, the execution section 22 executes an acceleration increase suppression operation (specifically, a first acceleration increase suppression operation and a second acceleration increase suppression operation to be described later) when the first other vehicle 2b is not detected by the surrounding environment sensor 14 in a situation in which the first other vehicle 2b is set as the target vehicle. The acceleration increase suppression operation is an operation that suppresses an increase in acceleration of the own vehicle 1 compared to an increase in acceleration of the own vehicle 1 when the second other vehicle 2a is set as the target vehicle in a situation in which the first other vehicle 2b is no longer detected by the surrounding environment sensor 14 or an increase in acceleration of the own vehicle 1 when the speed control is executed without setting the target vehicle. Since it is possible to suppress the own vehicle 1 from overtaking the first other vehicle 2b by executing such an acceleration increase suppression operation, it becomes easier to detect the first other vehicle 2b by the surrounding environment sensor 14. Therefore, appropriately assisting the driving of the rider of the straddle type vehicle 1 in the group traveling is realized.

Furthermore, in the present specification, the acceleration of the own vehicle 1 is defined as a value indicating a speed change rate of the own vehicle 1 with the traveling direction set as the positive direction and the direction opposite to the traveling direction set as the negative direction. That is, the deceleration of the own vehicle 1 corresponds to the acceleration that takes a negative value.

Fig. 5 is a flowchart showing an example of a flow of a process executed by the control device 20. Step S101 in Fig. 5 corresponds to the start of the control flow shown in Fig. 5. Step S110 in Fig. 5 corresponds to the end of the control flow shown in Fig. 5.

When the control flow shown in Fig. 5 is started, the execution section 22 determines whether the group traveling mode is being executed in step S102.

When it is determined that the group traveling mode is not being executed (step S102/NO), step S102 is repeated. On the other hand, when it is determined that the group traveling mode is being executed (step S102/YES), the process proceeds to step S103.

When the determination in step S102 is YES, the group traveling mode is being executed and as described above, the first other vehicle 2b corresponding to the other vehicle 2 located in the convoy to which the own vehicle 1 does not belong is basically set as the target vehicle. Then, when the determination in step S102 is YES, the execution section 22 determines whether the first other vehicle 2b is no longer detected by the surrounding environment sensor 14 in step S103.

When it is determined that the first other vehicle 2b is detected by the surrounding environment sensor 14 (step S103/NO), the process returns to step S102. On the other hand, when it is determined that the first other vehicle 2b is no longer detected by the surrounding environment sensor 14 (step S103/YES), the process proceeds to step S104.

When the determination in step S103 is YES, the execution section 22 determines whether the own vehicle 1 is decelerating when the determination in step S103 is YES in step S104. Furthermore, the execution section 22 can determine whether the own vehicle 1 is decelerating, for example, on the basis of the detection result of the front wheel speed sensor 15 and the rear wheel speed sensor 16.

If it is determined that the own vehicle 1 is decelerating when the determination in step S103 is YES (step S104/YES), the process proceeds to step S105. This case corresponds to a case where the first other vehicle 2b is no longer detected by the surrounding environment sensor 14 in a situation in which the own vehicle 1 is decelerating. On the other hand, if it is determined that the own vehicle 1 is not decelerating when the determination in step S103 is YES (step S104/NO), the process proceeds to step S106. This case corresponds to a case where the first other vehicle 2b is no longer detected by the surrounding environment sensor 14 in a situation in which the own vehicle 1 is accelerating.

When the determination in step S104 is YES, the execution section 22 executes the first acceleration increase suppression operation in step S105. The first acceleration increase suppression operation is an operation that suppresses an increase in acceleration of the own vehicle 1 compared to an increase in acceleration of the own vehicle 1 when the second other vehicle 2a is set as the target vehicle in a situation in which the first other vehicle 2b is no more detected by the surrounding environment sensor 14 or an increase in acceleration of the own vehicle 1 when the speed control is executed without setting the target vehicle. In particular, the first acceleration increase suppression operation is an operation executed when the first other vehicle 2b is no longer detected by the surrounding environment sensor 14 in a situation in which the own vehicle 1 is decelerating among these operations. The execution section 22 continues to decelerate the own vehicle 1 in the first acceleration increase suppression operation.

When the first acceleration increase suppression operation is not executed in a case where the first other vehicle 2b is no more detected by the surrounding environment sensor 14 in a situation in which the own vehicle 1 is decelerating, for example, the second other vehicle 2a is detected by the surrounding environment sensor 14 and is set as the target vehicle and the positional relationship between the own vehicle 1 and the second other vehicle 2a is adjusted to be the target positional relationship. In this case, since the speed of the own vehicle 1 is controlled so that the own vehicle 1 moves closer to the front second other vehicle 2a than the first other vehicle 2b set as the target vehicle, for example, the own vehicle 1 changes from the deceleration state to the acceleration state.

Further, when the first acceleration increase suppression operation is not executed in a case where the first other vehicle 2b is no more detected by the surrounding environment sensor 14 in a situation in which the own vehicle 1 is decelerating, for example, no other vehicle 2 is detected by the surrounding environment sensor 14 and the speed control is executed without setting the target vehicle. In this case, since the speed of the own vehicle 1 is controlled to the target speed, for example, the own vehicle 1 changes from a deceleration state to an acceleration state.

On the other hand, in the control flow of Fig. 5, when the first other vehicle 2b is no more detected by the surrounding environment sensor 14 in a situation in which the own vehicle 1 is decelerating, the first acceleration increase suppression operation is executed and the own vehicle 1 continues to decelerate. Accordingly, for example, the own vehicle 1 is suppressed from being changed from the deceleration state to the acceleration state. As a result, an increase in acceleration of the own vehicle 1 is suppressed compared to an increase in acceleration of the own vehicle 1 when the second other vehicle 2a is set as the target vehicle or an increase in acceleration of the own vehicle 1 when the speed control is executed without setting the target vehicle.

The execution section 22 may maintain the deceleration generated in the own vehicle 1 at a predetermined fixed value, for example, in the first acceleration increase suppression operation. However, it is desirable that the execution section 22 controls the deceleration generated in the own vehicle 1 by a method other than the method of maintaining the deceleration at the fixed value in the first acceleration increase suppression operation from the viewpoint of more appropriately suppressing an increase in acceleration of the own vehicle 1.

For example, the execution section 22 may control the deceleration generated in the own vehicle 1 on the basis of the deceleration state information of the own vehicle 1 before the acceleration increase suppression operation starts to be executed in the first acceleration increase suppression operation. The deceleration state information is information related to the deceleration state. For example, the deceleration state information may be information which indicates the deceleration itself, rough information in which the deceleration degree is expressed in several stages, or information that can be substantially converted into such information. For example, the acquisition section 21 can acquire the deceleration state information of the own vehicle 1 on the basis of the detection result of the front wheel speed sensor 15 and the rear wheel speed sensor 16. Further, the deceleration state information of the own vehicle 1 can be acquired, for example, at the time point when the first other vehicle 2b is no longer detected by the surrounding environment sensor 14, immediately before the time point, or immediately after the time point.

The execution section 22 maintains the deceleration generated in the own vehicle 1 at the deceleration indicated by the deceleration state information of the own vehicle 1, for example, in the first acceleration increase suppression operation. Accordingly, when the first other vehicle 2b is no longer detected by the surrounding environment sensor 14, it is possible to suppress a significant change in the deceleration state of the own vehicle 1 from the deceleration state at the time point when the first other vehicle 2b is no longer detected by the surrounding environment sensor 14, the deceleration state immediately before the time point, or the deceleration state immediately after the time point.

Here, the execution section 22 may control the deceleration generated in the own vehicle 1 on the basis of the deceleration state information of the first other vehicle 2b before the acceleration increase suppression operation starts to be executed in the first acceleration increase suppression operation. The execution section 22 maintains the deceleration generated in the own vehicle 1 at the deceleration indicated by the deceleration state information of the first other vehicle 2b, for example, in the first acceleration increase suppression operation. The deceleration state of the first other vehicle 2b is close to the deceleration state of the own vehicle 1 at the time point when the first other vehicle 2b is no longer detected by the surrounding environment sensor 14, immediately before the time point, or immediately after the time point. Therefore, when the first other vehicle 2b is no longer detected by the surrounding environment sensor 14 even when the deceleration state information of the first other vehicle 2b is used instead of the deceleration state information of the own vehicle 1, it is possible to suppress a significant change in the deceleration state of the own vehicle 1 from the deceleration state at the time point when the first other vehicle 2b is no longer detected by the surrounding environment sensor 14, the deceleration state immediately before the time point, or the deceleration state immediately after the time point.

For example, the acquisition section 21 can acquire the deceleration state information of the first other vehicle 2b on the basis of the surrounding environment information of the own vehicle 1. Further, the deceleration state information of the first other vehicle 2b can be acquired, for example, at the time point when the first other vehicle 2b is no longer detected by the surrounding environment sensor 14, immediately before the time point, or immediately after the time point.

Furthermore, the execution section 22 may control the deceleration generated in the own vehicle 1 on the basis of the deceleration state information of both the own vehicle 1 and the first other vehicle 2b before the acceleration increase suppression operation starts to be executed in the first acceleration increase suppression operation.

Further, for example, the execution section 22 may increase the deceleration generated in the own vehicle 1 over time in the first acceleration increase suppression operation. That is, the execution section 22 may gradually increase the deceleration generated in the own vehicle 1 in the first acceleration increase suppression operation. In this case, the execution section 22 may increase the deceleration generated in the own vehicle 1 over time to, for example, the maximum deceleration allowed in the adaptive cruise control (that is, the deceleration with a maximum absolute value) in the first acceleration increase suppression operation.

When the determination in step S104 is NO, the execution section 22 executes the second acceleration increase suppression operation in step S106. The second acceleration increase suppression operation is an operation that suppresses an increase in acceleration of the own vehicle 1 compared to an increase in acceleration of the own vehicle 1 when the second other vehicle 2a is set as the target vehicle in a situation in which the first other vehicle 2b is no longer detected by the surrounding environment sensor 14 or an increase in acceleration of the own vehicle 1 when the speed control is executed without setting the target vehicle. In particular, the second acceleration increase suppression operation is an operation executed when the first other vehicle 2b is no longer detected by the surrounding environment sensor 14 in a situation in which the own vehicle 1 is accelerating among these operations. The execution section 22 continues to accelerate the own vehicle 1 in the second acceleration increase suppression operation.

When the second acceleration increase suppression operation is not executed in a case where the first other vehicle 2b is no more detected by the surrounding environment sensor 14 in a situation in which the own vehicle 1 is accelerating, for example, the second other vehicle 2a is detected by the surrounding environment sensor 14 and is set as the target vehicle and the positional relationship between the own vehicle 1 and the second other vehicle 2a is adjusted to be the target positional relationship. In this case, since the speed of the own vehicle 1 is controlled so that the own vehicle 1 moves closer to the front second other vehicle 2a than the first other vehicle 2b set as the target vehicle, for example, the acceleration of the own vehicle 1 increases significantly.

Further, when the second acceleration increase suppression operation is not executed in a case where the first other vehicle 2b is no more detected by the surrounding environment sensor 14 in a situation in which the own vehicle 1 is accelerating, for example, no other vehicle 2 is detected by the surrounding environment sensor 14 and the speed control is executed without setting the target vehicle. In this case, since the speed of the own vehicle 1 is controlled to the target speed, for example, the acceleration of the own vehicle 1 increases significantly.

On the other hand, in the control flow of Fig. 5, when the first other vehicle 2b is no more detected by the surrounding environment sensor 14 in a situation in which the own vehicle 1 is accelerating, the second acceleration increase suppression operation is executed and the own vehicle 1 continues to accelerate. Here, in the second acceleration increase suppression operation, the acceleration of the own vehicle 1 is basically maintained or decreased and the acceleration of the own vehicle 1 does not increase significantly even in an increase state. As a result, an increase in acceleration of the own vehicle 1 is suppressed compared to an increase in acceleration of the own vehicle 1 when the second other vehicle 2a is set as the target vehicle or an increase in acceleration of the own vehicle 1 when the speed control is executed without setting the target vehicle.

The execution section 22 may maintain the acceleration generated in the own vehicle 1 at a predetermined fixed value, for example, in the second acceleration increase suppression operation. However, it is desirable that the execution section 22 controls the acceleration generated in the own vehicle 1 by a method other than the method of maintaining the acceleration at the fixed value in the second acceleration increase suppression operation from the viewpoint of more appropriately suppressing an increase in acceleration of the own vehicle 1.

For example, the execution section 22 may control the acceleration generated in the own vehicle 1 on the basis of the acceleration state information of the own vehicle 1 before the acceleration increase suppression operation starts to be executed in the second acceleration increase suppression operation. The acceleration state information is information related to the acceleration state. For example, the acceleration state information may be information which indicates the acceleration itself, rough information in which the acceleration degree is expressed in several stages, or information that can be substantially converted into such information. For example, the acquisition section 21 can acquire the acceleration state information of the own vehicle 1 on the basis of the detection result of the front wheel speed sensor 15 and the rear wheel speed sensor 16. Further, the acceleration state information of the own vehicle 1 can be acquired, for example, at the time point when the first other vehicle 2b is no longer detected by the surrounding environment sensor 14, immediately before the time point, or immediately after the time point.

The execution section 22 maintains the acceleration generated in the own vehicle 1 at the acceleration indicated by the acceleration state information of the own vehicle 1, for example, in the second acceleration increase suppression operation. Accordingly, when the first other vehicle 2b is no longer detected by the surrounding environment sensor 14, it is possible to suppress a significant change in the acceleration state of the own vehicle 1 from the acceleration state at the time point when the first other vehicle 2b is no longer detected by the surrounding environment sensor 14, the acceleration state immediately before the time point, or the acceleration state immediately after the time point.

Here, the execution section 22 may control the acceleration generated in the own vehicle 1 on the basis of the acceleration state information of the first other vehicle 2b before the acceleration increase suppression operation starts to be executed in the second acceleration increase suppression operation. The execution section 22 maintains the acceleration generated in the own vehicle 1 at the acceleration indicated by the acceleration state information of the first other vehicle 2b, for example, in the second acceleration increase suppression operation. The acceleration state of the first other vehicle 2b is close to the acceleration state of the own vehicle 1 at the time point when the first other vehicle 2b is no longer detected by the surrounding environment sensor 14, immediately before the time point, or immediately after the time point. Therefore, when the first other vehicle 2b is no longer detected by the surrounding environment sensor 14 even when the acceleration state information of the first other vehicle 2b is used instead of the acceleration state information of the own vehicle 1, it is possible to suppress a significant change in the acceleration state of the own vehicle 1 from the acceleration state when the first other vehicle 2b is no longer detected by the surrounding environment sensor 14, the acceleration state immediately before the time point, or the acceleration state immediately after the time point.

For example, the acquisition section 21 can acquire the acceleration state information of the first other vehicle 2b on the basis of the surrounding environment information of the own vehicle 1. Further, the acceleration state information of the first other vehicle 2b can be acquired, for example, at the time point when the first other vehicle 2b is no longer detected by the surrounding environment sensor 14, immediately before the time point, or immediately after the time point.

Furthermore, the execution section 22 may control the acceleration generated in the own vehicle 1 on the basis of the acceleration state information of both the own vehicle 1 and the first other vehicle 2b before the acceleration increase suppression operation starts to be executed in the second acceleration increase suppression operation.

Further, for example, the execution section 22 may decrease the acceleration generated in the own vehicle 1 over time in the second acceleration increase suppression operation. That is, the execution section 22 may gradually decrease the acceleration generated in the own vehicle 1 in the second acceleration increase suppression operation. In this case, the execution section 22 may decrease the acceleration generated in the own vehicle 1 over time until the acceleration reaches a value near zero, for example, in the second acceleration increase suppression operation.

As described above, the execution section 22 executes the acceleration increase suppression operation (specifically, the first acceleration increase suppression operation and the second acceleration increase suppression operation) when the first other vehicle 2b is no longer detected by the surrounding environment sensor 14 in a situation in which the first other vehicle 2b is set as the target vehicle. Accordingly, since it is possible to suppress the own vehicle 1 from overtaking the first other vehicle 2b when the first other vehicle 2b is no longer detected by the surrounding environment sensor 14 in a situation in which the first other vehicle 2b is set as the target vehicle, it becomes easier to detect the first other vehicle 2b again by the surrounding environment sensor 14. Therefore, it is possible to appropriately assist the driving of the rider of the straddle type vehicle 1 in the group traveling.

In step S107 after step S105 or step S106, the execution section 22 determines whether the first other vehicle 2b is detected again by the surrounding environment sensor 14.

When it is not determined that the first other vehicle 2b is detected again by the surrounding environment sensor 14 (step S107/NO), the process proceeds to step S108. On the other hand, when it is determined that the first other vehicle 2b is detected again by the surrounding environment sensor 14 (step S107/YES), the process proceeds to step S109.

When the determination in step S107 is NO, in step S108, the execution section 22 determines whether a reference time has elapsed since the acceleration increase suppression operation was started.

When it is determined that the reference time has not elapsed since the acceleration increase suppression operation was started (step S108/NO), the process returns to step S107. On the other hand, when it is determined that the reference time has elapsed since the acceleration increase suppression operation was started (step S108/YES), the process proceeds to step S109.

When the determination in step S107 is YES or the determination in step S108 is YES, in step S109, the execution section 22 cancels the acceleration increase suppression operation and the control flow shown in Fig. 5 ends.

Furthermore, since the first other vehicle 2b is set as the target vehicle again at the control flow end time point shown in Fig. 5 when the determination in step S107 is YES, the control flow shown in Fig. 5 is executed repeatedly. On the other hand, since the first other vehicle 2b is not set as the target vehicle at the control flow end time point shown in Fig. 5 when the determination in step S108 is YES, the control flow shown in Fig. 5 is executed again when the first other vehicle 2b is detected again and is set as the target vehicle again.

As described above, in the control flow of Fig. 5, the execution section 22 cancels the acceleration increase suppression operation when the state in which the first other vehicle 2b is not detected by the surrounding environment sensor 14 continues for more than the reference time in the acceleration increase suppression operation. Accordingly, it is possible to avoid a situation in which the acceleration increase suppression operation continues for a long period of time.

The reference time may be, for example, a fixed value. However, it is desirable that the execution section 22 changes the reference time on the basis of various information from the viewpoint of optimizing the length of the reference time.

For example, the execution section 22 may change the reference time on the basis of the deceleration state information of the own vehicle 1 when the first acceleration increase suppression operation is executed as the acceleration increase suppression operation. As described above, the deceleration state information can be acquired, for example, at the time point when the first other vehicle 2b is no longer detected by the surrounding environment sensor 14, immediately before the time point, or immediately after the time point. For example, the execution section 22 shortens the reference time as the deceleration indicated by the deceleration state information of the own vehicle 1 becomes larger (as the acceleration suppression degree by the acceleration increase suppression operation becomes larger). Accordingly, the first acceleration increase suppression operation can suppress a significant change in the positional relationship between the own vehicle 1 and the other vehicle 2 therearound due to the deceleration generated in the own vehicle 1.

Here, the execution section 22 may change the reference time on the basis of the deceleration state information of the first other vehicle 2b when the first acceleration increase suppression operation is executed as the acceleration increase suppression operation. As described above, the deceleration state information can be acquired, for example, at the time point when the first other vehicle 2b is no longer detected by the surrounding environment sensor 14, immediately before the time point, or immediately after the time point. For example, the execution section 22 shortens the reference time as the deceleration indicated by the deceleration state information of the first other vehicle 2b becomes larger (as the acceleration suppression degree by the acceleration increase suppression operation becomes larger). Accordingly, the first acceleration increase suppression operation can suppress a significant change in the positional relationship between the own vehicle 1 and the other vehicle 2 therearound due to the deceleration generated in the own vehicle 1.

Furthermore, the execution section 22 may change the reference time on the basis of the deceleration state information of both the own vehicle 1 and the first other vehicle 2b when the first acceleration increase suppression operation is executed as the acceleration increase suppression operation.

Further, for example, the execution section 22 may change the reference time on the basis of the acceleration state information of the own vehicle 1 when the second acceleration increase suppression operation is executed as the acceleration increase suppression operation. As described above, the acceleration state information can be acquired, for example, at the time point when the first other vehicle 2b is no longer detected by the surrounding environment sensor 14, immediately before the time point, or immediately after the time point. For example, the execution section 22 shortens the reference time as the acceleration indicated by the acceleration state information of the own vehicle 1 becomes smaller (as the acceleration suppression degree by the acceleration increase suppression operation becomes larger). Accordingly, the second acceleration increase suppression operation can suppress a significant change in the positional relationship between the own vehicle 1 and the other vehicle 2 therearound due to the acceleration generated in the own vehicle 1.

Here, the execution section 22 may change the reference time on the basis of the acceleration state information of the first other vehicle 2b when the second acceleration increase suppression operation is executed as the acceleration increase suppression operation. As described above, the acceleration state information can be acquired, for example, at the time point when the first other vehicle 2b is no longer detected by the surrounding environment sensor 14, immediately before the time point, or immediately after the time point. For example, the execution section 22 shortens the reference time as the acceleration indicated by the acceleration state information of the first other vehicle 2b becomes smaller (as the acceleration suppression degree by the acceleration increase suppression operation becomes larger). Accordingly, the second acceleration increase suppression operation can suppress a significant change in the positional relationship between the own vehicle 1 and the other vehicle 2 therearound due to the acceleration generated in the own vehicle 1.

Furthermore, the execution section 22 may change the reference time on the basis of the acceleration state information of both the own vehicle 1 and the first other vehicle 2b when the second acceleration increase suppression operation is executed as the acceleration increase suppression operation.

An example of the process executed by the control device 20 has been described above with reference to the flowchart of Fig. 5. However, the process executed by the control device 20 may be a process obtained by modifying the above-described process example.

For example, in the above-described example, the first acceleration increase suppression operation is executed when the first other vehicle 2b is no longer detected by the surrounding environment sensor 14 in a situation in which the first other vehicle 2b is set as the target vehicle during the execution of the group traveling mode and the own vehicle 1 is decelerating. However, the execution section 22 may execute the first acceleration increase suppression operation when the first other vehicle 2b is no longer detected by the surrounding environment sensor 14 in a situation in which the first other vehicle 2b is set as the target vehicle during the execution of the group traveling mode and the first other vehicle 2b is decelerating. Furthermore, in this case, if the own vehicle 1 is not decelerating when the first other vehicle 2b is no longer detected by the surrounding environment sensor 14, the execution section 22 starts to decelerate the own vehicle 1 in the first acceleration increase suppression operation.

Further, for example, in the above-described example, the second acceleration increase suppression operation is executed when the first other vehicle 2b is no longer detected by the surrounding environment sensor 14 in a situation in which the first other vehicle 2b is set as the target vehicle during the execution of the group traveling mode and the own vehicle 1 is accelerating. However, the execution section 22 may execute the second acceleration increase suppression operation when the first other vehicle 2b is no longer detected by the surrounding environment sensor 14 in a situation in which the first other vehicle 2b is set as the target vehicle during the execution of the group traveling mode and the first other vehicle 2b is accelerating. Furthermore, in this case, when the own vehicle 1 is not accelerating in a case where the first other vehicle 2b is no longer detected by the surrounding environment sensor 14, the execution section 22 starts to accelerate the own vehicle 1 in the second acceleration increase suppression operation.

Further, for example, an example has been described above in which the control device 20 can execute both the first acceleration increase suppression operation and the second acceleration increase suppression operation as the acceleration increase suppression operation. However, the control device 20 may execute only one of the first acceleration increase suppression operation and the second acceleration increase suppression operation as the acceleration increase suppression operation. For example, in the above-described process example of Fig. 5, the process may be modified so that the acceleration increase suppression operation is not executed when the determination in step S104 is NO. Further, for example, in the above-described process example of Fig. 5, the process may be modified so that the acceleration increase suppression operation is not executed when the determination in step S104 is YES.

Further, for example, in the above-described flowchart of Fig. 5, when it is determined that the group traveling mode is being executed (step S102/YES), the process in and after step S103 is executed. However, the execution condition that allows the execution of the process in and after step S103 is not limited to this example. The above-described execution condition may be any condition that allows the determination that a group including the own vehicle 1 and the other vehicle 2 is traveling as a group. For example, the execution condition may be a determination that the own vehicle 1 and the other vehicle 2 are traveling in a zigzag arrangement. For example, the control device 20 can acquire information indicating the positional relationship between the own vehicle 1 and the other vehicle 2 via wireless communication with the other vehicle 2 or infrastructure equipment and determine whether the own vehicle 1 and the other vehicle 2 are traveling in a zigzag arrangement using that information.

Further, for example, an example has been described above in which the vehicles are traveling as a group in a zigzag arrangement. However, the arrangement of the vehicles in the group traveling is not limited to the zigzag arrangement. For example, the arrangement of the vehicles in the group traveling may be a grid arrangement. In this case, the vehicles constituting the left vehicles and the vehicles constituting the right vehicles are arranged side by side in the left and right direction. The control device 20 can execute the above-described process even in the group traveling with such an arrangement.

### <Effect of control device>

The effect of the control device 20 according to the embodiment of the present invention will be described.

The control device 20 includes the execution section 22 which executes the positional relationship adjusting operation (in the above-described example, the adaptive cruise control) that adjusts the positional relationship between the own vehicle 1 and the vehicle set as the target vehicle in the other vehicles 2 constituting a group, including a plurality of straddle type vehicles including the own vehicle 1 and traveling in a plurality of convoys as a group, to be the target positional relationship. Then, in the positional relationship adjusting operation, the execution section 22 sets the other vehicle 2 detected by the surrounding environment sensor 14 installed in the own vehicle 1 as the target vehicle, executes the speed control for controlling the speed of the own vehicle 1 to the target speed when the target vehicle is not set, and executes the acceleration increase suppression operation that suppresses an increase in acceleration of the own vehicle 1 compared to an increase in acceleration of the own vehicle 1 when the second other vehicle 2a corresponding to the other vehicle 2 located in the convoy to which the own vehicle 1 belongs is set as the target vehicle in a case where the first other vehicle 2b is no longer detected by the surrounding environment sensor 14 in a situation in which the first other vehicle 2b corresponding to the other vehicle 2 located in the convoy to which the own vehicle 1 does not belong is set as the target vehicle or an increase in acceleration of the own vehicle 1 when the speed control is executed without setting the target vehicle. Accordingly, it is possible to suppress the own vehicle 1 from overtaking the first other vehicle 2b when the first other vehicle 2b is no longer detected by the surrounding environment sensor 14 in a situation in which the first other vehicle 2b is set as the target vehicle. Therefore, it becomes easier to detect the first other vehicle 2b again by the surrounding environment sensor 14 and it is possible to appropriately assist the driving of the rider of the straddle type vehicle 1 in the group traveling.

Desirably, in the control device 20, the execution section 22 continues to decelerate the own vehicle 1 in the acceleration increase suppression operation (for example, the first acceleration increase suppression operation) when the first other vehicle 2b is no longer detected by the surrounding environment sensor 14 in a situation in which the first other vehicle 2b is set as the target vehicle during the execution of the positional relationship adjusting operation and the own vehicle 1 is decelerating. Accordingly, for example, the own vehicle 1 is suppressed from being changed from the deceleration state to the acceleration state. As a result, an increase in acceleration of the own vehicle 1 is suppressed compared to an increase in acceleration of the own vehicle 1 when the second other vehicle 2a is set as the target vehicle or an increase in acceleration of the own vehicle 1 when the speed control is executed without setting the target vehicle. Therefore, it is appropriately realized that the first other vehicle 2b is easily detected again by the surrounding environment sensor 14 by suppressing the own vehicle 1 from overtaking the first other vehicle 2b when the first other vehicle 2b is no longer detected by the surrounding environment sensor 14 in a situation in which the first other vehicle 2b is set as the target vehicle.

Desirably, in the control device 20, the execution section 22 continues or starts to decelerate the own vehicle 1 in the acceleration increase suppression operation (for example, the first acceleration increase suppression operation) when the first other vehicle 2b is no longer detected by the surrounding environment sensor 14 in a situation in which the first other vehicle 2b is set as the target vehicle during the execution of the positional relationship adjusting operation and the first other vehicle 2b is decelerating. Accordingly, for example, the own vehicle 1 is suppressed from being changed from the deceleration state to the acceleration state. As a result, an increase in acceleration of the own vehicle 1 is suppressed compared to an increase in acceleration of the own vehicle 1 when the second other vehicle 2a is set as the target vehicle or an increase in acceleration of the own vehicle 1 when the speed control is executed without setting the target vehicle. Therefore, it is appropriately realized that the first other vehicle 2b is easily detected again by the surrounding environment sensor 14 by suppressing the own vehicle 1 from overtaking the first other vehicle 2b when the first other vehicle 2b is no longer detected by the surrounding environment sensor 14 in a situation in which the first other vehicle 2b is set as the target vehicle.

Desirably, in the control device 20, the execution section 22 controls the deceleration generated in the own vehicle 1 on the basis of at least one deceleration state information of the own vehicle 1 and the first other vehicle 2b before the acceleration increase suppression operation starts to be executed in the acceleration increase suppression operation (for example, the first acceleration increase suppression operation). Accordingly, when the first other vehicle 2b is no longer detected by the surrounding environment sensor 14, it is possible to suppress a significant change in the deceleration state of the own vehicle 1 from the deceleration state at the time point when the first other vehicle 2b is no longer detected by the surrounding environment sensor 14, the deceleration state immediately before the time point, or the deceleration state immediately after the time point. Therefore, it is possible to appropriately suppress the own vehicle 1 from overtaking the first other vehicle 2b.

Desirably, in the control device 20, the execution section 22 increases the deceleration generated in the own vehicle 1 over time in the acceleration increase suppression operation (for example, the first acceleration increase suppression operation). Accordingly, it is more appropriately realized that the first other vehicle 2b, which is assumed to be located behind the detection range 3 of the surrounding environment sensor 14, is easily detected again by the surrounding environment sensor 14.

Desirably, in the control device 20, the execution section 22 continues to accelerate the own vehicle 1 in the acceleration increase suppression operation (for example, the second acceleration increase suppression operation) when the first other vehicle 2b is no longer detected by the surrounding environment sensor 14 in a situation in which the first other vehicle 2b is set as the target vehicle during the execution of the positional relationship adjusting operation and the own vehicle 1 is accelerating. Here, in the acceleration increase suppression operation, the acceleration of the own vehicle 1 is basically maintained or decreased and the acceleration of the own vehicle 1 does not increase significantly even in an increase state. As a result, an increase in acceleration of the own vehicle 1 is suppressed compared to an increase in acceleration of the own vehicle 1 when the second other vehicle 2a is set as the target vehicle or an increase in acceleration of the own vehicle 1 when the speed control is executed without setting the target vehicle. Therefore, it is appropriately realized that the first other vehicle 2b is easily detected again by the surrounding environment sensor 14 by suppressing the own vehicle 1 from overtaking the first other vehicle 2b when the first other vehicle 2b is no longer detected by the surrounding environment sensor 14 in a situation in which the first other vehicle 2b is set as the target vehicle.

Desirably, in the control device 20, the execution section 22 continues or starts to accelerate the own vehicle 1 in the acceleration increase suppression operation (for example, the second acceleration increase suppression operation) when the first other vehicle 2b is no longer detected by the surrounding environment sensor 14 in a situation in which the first other vehicle 2b is set as the target vehicle during the execution of the positional relationship adjusting operation and the first other vehicle 2b is accelerating. Here, in the acceleration increase suppression operation, the acceleration of the own vehicle 1 is basically maintained or decreased and the acceleration of the own vehicle 1 does not increase significantly even in an increase state. As a result, an increase in acceleration of the own vehicle 1 is suppressed compared to an increase in acceleration of the own vehicle 1 when the second other vehicle 2a is set as the target vehicle or an increase in acceleration of the own vehicle 1 when the speed control is executed without setting the target vehicle. Therefore, it is appropriately realized that the first other vehicle 2b is easily detected again by the surrounding environment sensor 14 by suppressing the own vehicle 1 from overtaking the first other vehicle 2b when the first other vehicle 2b is no longer detected by the surrounding environment sensor 14 in a situation in which the first other vehicle 2b is set as the target vehicle.

Desirably, in the control device 20, in the acceleration increase suppression operation (for example, the second acceleration increase suppression operation), the execution section 22 controls the acceleration generated in the own vehicle 1 on the basis of at least one acceleration state information of the own vehicle 1 and the first other vehicle 2b before the acceleration increase suppression operation starts to be executed. Accordingly, when the first other vehicle 2b is no longer detected by the surrounding environment sensor 14, it is possible to suppress a significant change in the acceleration state of the own vehicle 1 from the acceleration state at the time point when the first other vehicle 2b is no longer detected by the surrounding environment sensor 14, the acceleration state immediately before the time point, or the acceleration state immediately after the time point. Therefore, it is possible to appropriately suppress the own vehicle 1 from overtaking the first other vehicle 2b.

Desirably, in the control device 20, the execution section 22 decreases the acceleration generated in the own vehicle 1 over time in the acceleration increase suppression operation (for example, the second acceleration increase suppression operation). Accordingly, it is more appropriately realized that the first other vehicle 2b, which is assumed to be located behind the detection range 3 of the surrounding environment sensor 14, is easily detected again by the surrounding environment sensor 14.

Desirably, in the control device 20, the execution section 22 cancels the acceleration increase suppression operation when the state in which the first other vehicle 2b is not detected by the surrounding environment sensor 14 continues for more than the reference time in the acceleration increase suppression operation. Accordingly, it is possible to avoid a situation in which the acceleration increase suppression operation continues for a long period of time.

Desirably, in the control device 20, the reference time is a fixed value. Accordingly, it is appropriately realized that a situation in which the acceleration increase suppression operation continues for a long period of time is avoided.

Desirably, in the control device 20, the execution section 22 cancels the acceleration increase suppression operation when the state in which the first other vehicle 2b is not detected by the surrounding environment sensor 14 continues for more than the reference time in the acceleration increase suppression operation (for example, the first acceleration increase suppression operation) and changes the reference time on the basis of at least one deceleration state information of the own vehicle 1 and the first other vehicle 2b. Accordingly, the acceleration increase suppression operation can suppress a significant change in the positional relationship between the own vehicle 1 and the other vehicle 2 therearound due to the deceleration generated in the own vehicle 1.

Desirably, in the control device 20, the execution section 22 cancels the acceleration increase suppression operation when the state in which the first other vehicle 2b is not detected by the surrounding environment sensor 14 continues for more than the reference time in the acceleration increase suppression operation (for example, the second acceleration increase suppression operation) and changes the reference time on the basis of at least one acceleration state information of the own vehicle 1 and the first other vehicle 2b. Accordingly, the acceleration increase suppression operation can suppress a significant change in the positional relationship between the own vehicle 1 and the other vehicle 2 therearound due to the acceleration generated in the own vehicle 1.

The present invention is not limited to the description of the embodiment. For example, only a part of the embodiment may be implemented.

### Reference Signs List

1: Saddle type vehicle (own vehicle)
2: Other vehicle
2a: Other vehicle (second other vehicle)
2b: Other vehicle (first other vehicle)
2c: Other vehicle
2d: Other vehicle
3: Detection range
11: Engine
12: Hydraulic pressure control unit
13: Input device
14: Surrounding environment sensor
15: Front wheel speed sensor
16: Rear wheel speed sensor
20: Control device
21: Acquisition section
22: Execution section

## Claims

1. A control device (20) for controlling a behavior of a straddle type vehicle (1), comprising:
an execution section (22) which executes a positional relationship adjusting operation that adjusts a positional relationship between an own vehicle (1) and a vehicle set as a target vehicle in the other vehicles (2) constituting a group, including a plurality of straddle type vehicles including the own vehicle (1) and traveling in a plurality of convoys as a group, to be a target positional relationship,
wherein in the positional relationship adjusting operation, the execution section (22) sets the other vehicle (2) detected by a surrounding environment sensor (14) installed to the own vehicle (1) as the target vehicle, executes speed control for controlling a speed of the own vehicle (1) to a target speed when the target vehicle is not set, and executes an acceleration increase suppression operation that suppresses an increase in acceleration of the own vehicle (1) compared to an increase in acceleration of the own vehicle (1) when a second other vehicle (2a) corresponding to the other vehicle (2) located in the convoy to which the own vehicle (1) belongs is set as the target vehicle in a case where a first other vehicle (2b) is no more detected by the surrounding environment sensor (14) in a situation in which the first other vehicle (2b) corresponding to the other vehicle (2) located in the convoy to which the own vehicle (1) does not belong is set as the target vehicle or compared to an increase in acceleration of the own vehicle (1) when the speed control is executed without setting the target vehicle.

2. The control device according to claim 1,
wherein the execution section (22) continues to decelerate the own vehicle (1) in the acceleration increase suppression operation when the first other vehicle (2b) is no more detected by the surrounding environment sensor (14) in a situation in which the first other vehicle (2b) is set as the target vehicle during execution of the positional relationship adjusting operation and the own vehicle (1) is decelerating.

3. The control device according to claim 1,
wherein the execution section (22) continues or starts to decelerate the own vehicle (1) in the acceleration increase suppression operation when the first other vehicle (2b) is no more detected by the surrounding environment sensor (14) in a situation in which the first other vehicle (2b) is set as the target vehicle during execution of the positional relationship adjusting operation and the first other vehicle (2b) is decelerating.

4. The control device according to claim 2 or 3,
wherein in the acceleration increase suppression operation, the execution section (22) controls deceleration generated in the own vehicle (1) on the basis of at least one deceleration state information of the own vehicle (1) and the first other vehicle (2b) before the acceleration increase suppression operation starts to be executed.

5. The control device according to claim 2 or 3,
wherein the execution section (22) increases deceleration generated in the own vehicle (1) over time in the acceleration increase suppression operation.

6. The control device according to claim 1,
wherein the execution section (22) continues to accelerate the own vehicle (1) in the acceleration increase suppression operation when the first other vehicle (2b) is no more detected by the surrounding environment sensor (14) in a situation in which the first other vehicle (2b) is set as the target vehicle during execution of the positional relationship adjusting operation and the own vehicle (1) is accelerating.

7. The control device according to claim 1,
wherein the execution section (22) continues or starts to accelerate the own vehicle (1) in the acceleration increase suppression operation when the first other vehicle (2b) is no more detected by the surrounding environment sensor (14) in a situation in which the first other vehicle (2b) is set as the target vehicle during execution of the positional relationship adjusting operation and the first other vehicle (2b) is accelerating.

8. The control device according to claim 6 or 7,
wherein in the acceleration increase suppression operation, the execution section (22) controls acceleration generated in the own vehicle (1) on the basis of at least one acceleration state information of the own vehicle (1) and the first other vehicle (2b) before the acceleration increase suppression operation starts to be executed.

9. The control device according to claim 6 or 7,
wherein the execution section (22) decreases acceleration generated in the own vehicle (1) over time in the acceleration increase suppression operation.

10. The control device according to any one of claims 1 to 3, 6, and 7,
wherein when a state in which the first other vehicle (2b) is not detected by the surrounding environment sensor (14) continues for more than a reference time in the acceleration increase suppression operation, the execution section (22) cancels the acceleration increase suppression operation.

11. The control device according to claim 10,
wherein the reference time is a fixed value.

12. The control device according to claim 2 or 3,
wherein when a state in which the first other vehicle (2b) is not detected by the surrounding environment sensor (14) continues for more than a reference time in the acceleration increase suppression operation, the execution section (22) cancels the acceleration increase suppression operation and changes the reference time on the basis of at least one deceleration state information of the own vehicle (1) and the first other vehicle (2b).

13. The control device according to claim 6 or 7,
wherein when a state in which the first other vehicle (2b) is not detected by the surrounding environment sensor (14) continues for more than a reference time in the acceleration increase suppression operation, the execution section (22) cancels the acceleration increase suppression operation and changes the reference time on the basis of at least one acceleration state information of the own vehicle (1) and the first other vehicle (2b).

14. A control method of controlling a behavior of a straddle type vehicle (1), comprising:
allowing an execution section (22) of a control device (20) to execute a positional relationship adjusting operation that adjusts a positional relationship between an own vehicle (1) and a vehicle set as a target vehicle in the other vehicles (2) constituting a group, including a plurality of straddle type vehicles including the own vehicle (1) and traveling in a plurality of convoys as a group, to be a target positional relationship,
wherein in the positional relationship adjusting operation, the execution section (22) sets the other vehicle (2) detected by a surrounding environment sensor (14) installed to the own vehicle (1) as the target vehicle, executes speed control for controlling a speed of the own vehicle (1) to a target speed when the target vehicle is not set, and executes an acceleration increase suppression operation that suppresses an increase in acceleration of the own vehicle (1) compared to an increase in acceleration of the own vehicle (1) when a second other vehicle (2a) corresponding to the other vehicle (2) located in the convoy to which the own vehicle (1) belongs is set as the target vehicle in a case where a first other vehicle (2b) is no more detected by the surrounding environment sensor (14) in a situation in which the first other vehicle (2b) corresponding to the other vehicle (2) located in the convoy to which the own vehicle (1) does not belong is set as the target vehicle or compared to an increase in acceleration of the own vehicle (1) when the speed control is executed without setting the target vehicle.
